# FASCICULE DE BREVET EUROPEEN

(11) **EP 0 739 077 B1**
(45) Date de publication et mention de la délivrance du brevet: **11.08.1999**
(21) Numéro de dépôt: 96400828.8
(22) Date de dépôt: 18.04.1996
(51) Int. Cl.: H02K 5/14, H02K 5/22, H02K 11/00, B60S 1/08

(54) **Moto-réducteur, notamment pour l'entrainement d'au moins un essuie-glace de véhicule automobile, et procédé de montage d'une plaquette porte-charbons et d'au moins un composant électrique sur un tel moto-réducteur**
Getriebemotor, insbesondere zum Antrieb mindestens eines Scheibenwischers für Kraftfahrzeuge und Verfahren zur Montage eines Bürstenhalters und mindestens eines elektrischen Bauelementes in einen solchen Motor
Geared motor, in particular for driving at least one windscreen wiper for vehicles and method of assembling a brush holder and at least one electrical component in such a motor

(30) Priorité: 21.04.1995 FR 9504798
(43) Date de publication de la demande: 23.10.1996
(73) Titulaire: VALEO SYSTEMES D'ESSUYAGE, 78321 La Verrière (FR)
(72) Inventeur: Blanchet, Pierre, Scorbé Clairvaux, 86140 Lencloitre (FR)
(74) Mandataire: Martin, Jean-Jacques

(56) Documents cités:
- WO-A-91/03856
- DE-A- 4 038 317
- FR-A- 2 656 171
- US-A- 5 006 747

## Description

La présente invention se rapporte à un moto-réducteur, notamment moto-réducteur pour l'entraînement d'au moins un essuie-glace de véhicule automobile.

Elle se rapporte également à un procédé de montage d'une plaquette porte-charbons et d'au moins un composant électrique sur le socle d'un tel moto-réducteur.

Il est bien connu d'équiper les carters de moto-réducteurs électriques d'essuyage pour véhicules automobiles d'une plaquette porte-charbons.

La plaquette porte-charbons, réalisée en matière plastique, comporte un évidement central circulaire pour le passage du collecteur du moto-réducteur et est équipée généralement de deux ou trois charbons disposés dans des guides.

Cette plaquette comporte également des composants électriques appartenant au circuit d'alimentation du moto-réducteur, et par exemple une borne de connexion pour l'alimentation du moto-réducteur ou un composant de protection thermique, à savoir un composant apte à interrompre l'alimentation électrique du moto-réducteur en cas de surchauffe de celui-ci.

En général, cette plaquette est montée sur le socle du moto-réducteur en étant en appui sur des amortisseurs.

Lors du fonctionnement d'un tel moto-réducteur, l'induit a tendance à vibrer et les charbons, qui sont en appui sur le collecteur de l'induit, transmettent ces vibrations à la plaquette portant les composants précités et donc aux composants eux-mêmes, ce qui risque de créer des bruits et des perturbations dans le circuit d'alimentation du moto-réducteur. Un tel moto-réducteur selon l'art antérieur est connu du document WO-A-9 103 856.

La présente invention vise à remédier aux problèmes précités tout en facilitant le montage de la plaquette porte-charbons et des composants électriques sur le moto-réducteur.

Ainsi, l'invention propose un moto-réducteur, notamment moto-réducteur pour l'entraînement d'au moins un essuie-glace de véhicule automobile, dont le soclc est pourvu d'une plaquette amovible porte-charbons et d'au moins un composant électrique relié à la plaquette par un conducteur électrique souple, ce composant appartenant au circuit d'alimentation du moto-réducteur.

Le but précité est atteint conformément à l'invention par le fait que la plaquette comporte des aménagements de maintien temporaire du composant pendant le montage de la plaquette, ce composant étant apte à coulisser par rapport à la plaquette pour coopérer avec des aménagements de retenue dudit composant prévus sur le socle du moto-réducteur.

A la fin du montage, le composant étant immobilisé sur le socle dans les aménagements de retenue, il n'est plus exposé aux vibrations de l'induit et ne risque donc plus de créer des bruits ou des perturbations dans le circuit d'alimentation du moto-réducteur.

Dans une forme de réalisation préférée, le moto-réducteur comporte, à titre de composant électrique, une borne de connexion.

Selon une autre forme de réalisation, il comporte, à titre de composant électrique, un composant de protection thermique.

Selon une caractéristique avantageuse, le composant est monté à force sur le socle.

L'invention concerne également un procédé de montage d'une plaquette porte-charbons et d'au moins un composant électrique sur le socle d'un moto-réducteur électrique d'essuyage, ce composant appartenant au circuit d'alimentation du moto-réducteur.

Ce procédé comprend les étapes qui consistent à :
- prévoir une plaquette porte-charbons qui comporte des aménagements de maintien temporaire dudit composant, lequel est relié à ladite plaquette par un conducteur souple et est apte à coulisser par rapport à celle-ci ;
- translater la plaquette et le composant jusqu'à dcs butées respectives sur des distances différentes, une partie initiale du mouvement de translation s'effectuant de concert.

De cette manière, un seul et même outil peut réaliser la mise en place de la plaquette porte-charbons et des composants électriques sur le socle du moto-réducteur. Un tel procédé est donc facilement robotisable.

Selon d'autres caractéristiques avantageuses de ce procédé :
- la course de translation du composant est inférieure à celle de la plaquette ;
- le composant consiste en une borne de connexion ;
- la course de translation du composant est supérieure à celle de la plaquette ;
- le composant consiste en un composant de protection thermique ;
- une partie finale de la course de translation du composant assure sa fixation dans un aménagement de retenue du socle.

D'autres avantages de l'invention apparaîtront à la lecture de la description détaillée d'une forme de réalisation particulière. Cette description est faite en référence aux dessins annexés dans lesquels :
- la figure 1 est une vue de face d'une plaquette porte-charbons qui équipe un moto-réducteur conforme à la présente invention ;
- la figure 2 est une vue en perspective de la plaquette porte-charbons de la figure 1 ;
- les figures 3, 4, 5 et 6 sont des schémas destinés à illustrer les différentes étapes du procédé selon l'invention ;
- la figure 7 est une vue partielle en perspective du socle d'un moto-réducteur équipé d'une plaquette porte-charbons et de composants électriques associés.

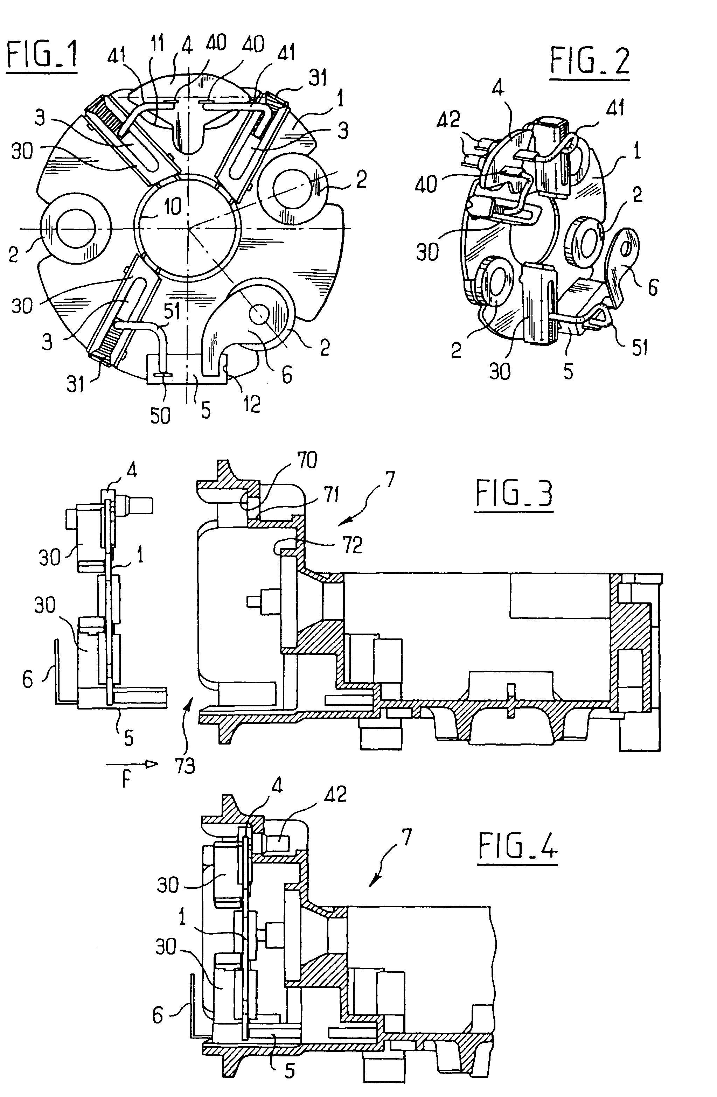

La plaquette porte-charbons 1 représentée aux figures 1 et 2 est réalisée en matière plastique et a la forme générale d'un disque de faible épaisseur. De manière connue, elle est équipée de trois tampons amortisseurs 2 de forme générale cylindrique qui s'étendent de part et d'autre du plan général de la plaquette. De tels tampons sont destinés à amortir les vibrations qui pourraient être créées au niveau du collecteur du moto-réducteur.

La plaquette présente une ouverture centrale circulaire 10 pour le passage du collecteur du moto-réducteur.

Egalement de manière connue, la plaquette est pourvue, selon des directions sensiblement radiales, de trois porte-charbons 30 à l'intérieur desquels sont montés des charbons 3, lesquels sont mis sous tension à l'aide de ressorts 31.

Entre les deux porte-charbons disposés dans la partie supérieure de la plaquette telle qu'elle est représentée aux figures 1 et 2, il est prévu, dans la matière de la plaquette, une large échancrure 11 dans laquelle est placée une borne de connexion 4. Cette borne est formée d'une plaque de forme générale triangulaire qui prend appui sur la surface de la plaquette 1. Elle comporte sur sa face tournée du côté des porte-charbons, deux contacts métalliques 40 sur lesquels sont branchés des conducteurs électriques souples 41 reliés aux charbons 3. Du côté opposé, la borne comporte des plots de connexion 42.

Selon une disposition diamétralement opposée, la plaquette est pourvue d'une seconde échancrure 12 dans laquelle est emmanchée à force un composant de protection thermique 5, c'est-à-dire un composant électrique destiné à coopérer avec le moto-réducteur et à permettre son arrêt en cas de surchauffe.

Ce composant de protection thermique a la forme générale d'un parallélépipède qui s'étend au-dessus du plan général de la plaquette et qui porte un contact 50 relié au troisième charbon 3 par un conducteur souple 51, ainsi qu'une cosse de mise à la masse 6.

Les échancrures 11 et 12 constituent des aménagements de maintien temporaire des composants 4 et 5 qui appartiennent au circuit d'alimentation du moto-réducteur.

Selon une caractéristique importante de la présente invention, ces aménagements sont tels que les composants 4 et 5 sont aptes à coulisser par rapport à la plaquette pour coopérer avec le moto-réducteur.

Cette caractéristique sera mise en avant dans la suite de la présente description.

On a représenté aux figures 3 à 6 en coupe longitudinale une partie du socle 7 du moto-réducteur sur lequel la plaquette porte-charbons est destinée à venir en place.

Ce socle comporte des aménagements sur/ou dans lesquels la plaquette porte-charbons, la borne de connexion et le composant de protection thermique sont destinés respectivement à venir en place.

En particulier, le socle comporte une ouverture 71 à l'intérieur de laquelle les plots 42 de la borne de connexion 4 sont destinés à venir en place. La plaquette porte-charbons est quant à elle destinée à venir se positionner contre un épaulement cylindrique 72 qui entoure le collecteur du moto-réducteur. Enfin, le composant de protection thermique est destiné à venir en place dans un logement prévu à l'intérieur du socle 7.

Comme on le remarque à l'observation des figures, la borne 4, la plaquette porte-charbons 1 et le composant de protection thermique 5 sont destinés à venir en place sur le socle en des emplacements distincts, à des distances différentes les unes des autres de l'ouverture d'accès 73 du socle.

Le procédé de montage conforme à l'invention consiste à prévoir une plaquette 1 telle que celle décrite en référence aux figures 1 et 2.

Une autre étape du procédé consiste à translater cette plaquette portant les composants 4 et 5 en direction du socle du moto-réducteur, comme le montrent les figures 3 à 6.

Dans un premier temps (figure 3), on amène la plaquette face au socle 7.

Dans un second temps, on translate la plaquette en direction du socle (flèche **f**), jusqu'à ce que la plaque de la borne de connexion 4 vienne en appui contre la partie de matière 70 du socle, cette partie de matière formant une butée d'arrêt pour la borne de connexion. On se trouve alors dans la position de la figure 4 dans laquelle la borne de connexion 4 est mise en place.

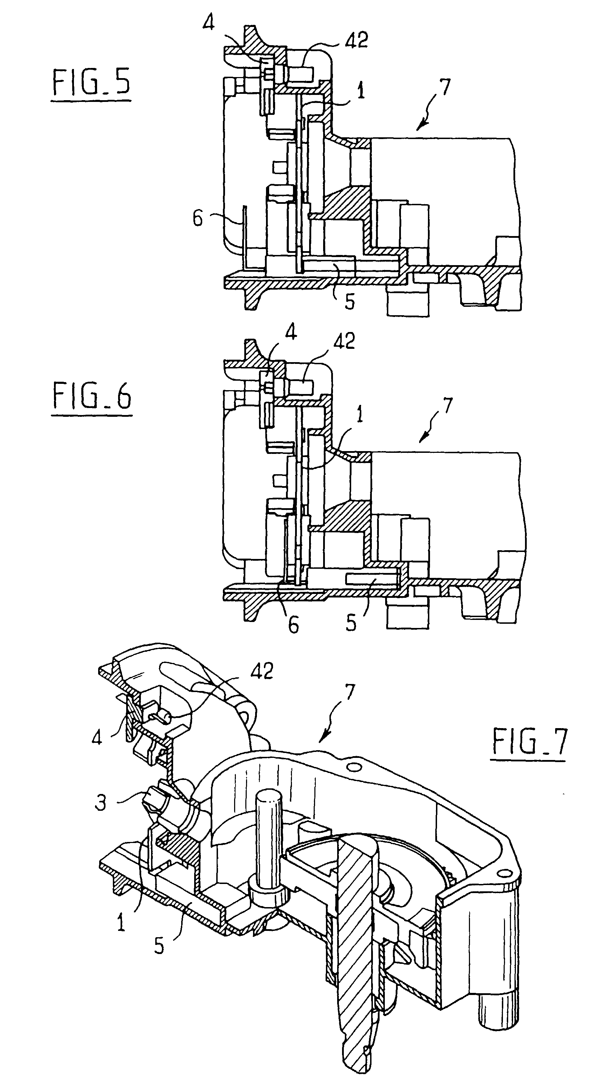

Dans un troisième temps, on continue à faire coulisser la plaquette et le composant de protection thermique en direction du socle jusqu'à ce que la plaquette 1 vienne en appui contre la couronne 72 du socle. C'est alors la situation de la figure 5.

Arrivé dans cette position, on fait alors coulisser le composant de protection thermique jusque dans son logement ménagé dans le socle, ceci par exemple avec un outil étroit permettant de réaliser un mouvement de poussée sur celle-ci. On se trouve alors dans la position des figures 6 et 7.

Comme on peut le noter, la course de translation de la borne 4 est inférieure à celle de la plaquette 1 alors que la course de translation du composant de protection thermique 5 est supérieure à celle de la plaquette 1.

On a ainsi réalisé le montage de la plaquette porte-charbons et des composants électriques sur le socle par un même mouvement de l'ensemble de ces éléments. Une telle manoeuvre se prête tout à fait à une robotisation, ce qui permet d'augmenter considérablement la vitesse de mise en place de la plaquette porte-charbons et des composants électriques.

De plus, à la fin du montage, les composants électriques sont disposés dans des logements du socle du moto-réducteur et ne sont donc pas exposés aux vibrations de l'induit lors du fonctionnement du moteur.

Bien entendu, l'invention s'applique au montage d'une plaquette porte-charbons équipée de toutes sortes de composants électriques ou électroniques associés au moto-réducteur.

## Revendications

1. Moto-réducteur électrique d'essuyage pour véhicule automobile, dont le socle (7) est pourvu d'une plaquette amovible (1) porte-charbons (3) et d'au moins un composant électrique (4, 5) relié à la plaquette (1) par un conducteur électrique souple (41, 51), ce composant (4, 5) appartenant au circuit d'alimentation du moto-réducteur, caractérisé en ce que ladite plaquette (1) comporte des aménagements (11, 12) de maintien temporaire dudit composant (4, 5) pendant le montage de la plaquette (1), ce composant étant apte à coulisser par rapport à la plaquette (1) pour coopérer avec des aménagements de retenue dudit composant (4, 5) prévus sur ledit socle (7) du moto-réducteur.

2. Moto-réducteur selon la revendication 1, caractérisé en ce qu'il comporte, à titre de composant électrique, une borne de connexion (4).

3. Moto-réducteur selon la revendication 1 ou 2, caractérisé en ce qu'il comporte, à titre de composant électrique, un composant de protection thermique (5).

4. Moto-réducteur selon l'une des revendications 1 à 3, caractérisé en ce que ledit composant (4, 5) est monté à force sur le socle.

5. Procédé de montage d'une plaquette porte-charbons (1) et d'au moins un composant électrique (4, 5) sur le socle (7) d'un moto-réducteur électrique d'essuyage, ce composant appartenant au circuit d'alimentation du moto-réducteur, caractérisé en ce qu'il comprend les étapes qui consistent à :
a) prévoir une plaquette porte-charbons (1) qui comporte des aménagements (11, 12) de maintien temporaire dudit composant (4, 5), lequel est relié à ladite plaquette par un conducteur souple (41, 51) et est apte à coulisser par rapport à celle-ci ;
b) translater ladite plaquette (1) et le composant (4, 5) jusqu'à des butées respectives sur des distances différentes, une partie initiale du mouvement de translation s'effectuant de concert.

6. Procédé selon la revendication 5, caractérisé en ce que la course de translation du composant (4) est inférieure à celle de la plaquette (1).

7. Procédé selon la revendication 6, caractérisé en ce que ledit composant consiste en une borne de connexion (4).

8. Procédé selon la revendication 5, caractérisé en ce que la course de translation du composant (5) est supérieure à celle de la plaquette (1).

9. Procédé selon la revendication 8, caractérisé en ce que ledit composant consiste en un composant de protection thermique (5).

10. Procédé selon la revendication 8 ou 9, caractérisé en ce qu'une partie finale de la course de translation du composant (5) assure sa fixation dans un aménagement de retenue du socle (7).

## Patentansprüche

1. Elektrischer Wischergetriebemotor für Kraftfahrzeuge, dessen Sockel (7) mit einer abnehmbaren Platte (1) mit Bürstenhaltern (3) und mit mindestens einem elektrischen Bauelement (4, 5) versehen ist, das durch einen biegsamen elektrischen Leiter (41, 51) mit der Platte (1) verbunden ist, wobei dieses Bauelement (4, 5) zur Speiseschaltung des Getriebemotors gehört, **dadurch gekennzeichnet,** daß die besagte Platte (1) Anordnungen (11, 12) zur zeitweiligen Halterung des besagten Bauelements (4, 5) während der Montage der Platte (1) umfaßt, wobei sich dieses Bauelement im Verhältnis zur Platte (1) verschieben kann, um mit an dem besagten Sockel (7) des Getriebemotors vorgesehenen Anordnungen zum Halten des besagten Bauelements (4, 5) zusammenzuwirken.

2. Getriebemotor nach Anspruch 1, **dadurch gekennzeichnet,** daß er als elektrisches Bauelement eine Anschlußklemme (4) umfaßt.

3. Getriebemotor nach Anspruch 1 oder 2, **dadurch gekennzeichnet,** daß er als elektrisches Bauelement ein Wärmeschutzelement (5) umfaßt.

4. Getriebemotor nach einem der Ansprüche 1 bis 3, **dadurch gekennzeichnet,** daß das besagte Bauelement (4, 5) fest auf dem Sockel angebracht ist.

5. Verfahren zur Montage einer Bürstenhalterplatte (1) und mindestens eines elektrischen Bauelements (4, 5) auf dem Sockel (7) eines elektrischen Wischergetriebemotors, wobei dieses Bauelement zur Speiseschaltung des Getriebemotors gehört, **dadurch gekennzeichnet,** daß es die folgenden Schritte umfaßt, die darin bestehen:
a) eine Bürstenhalterplatte (1) vorzusehen, die Anordnungen (11, 12) zur zeitweiligen Halterung des besagten Bauelements (4, 5) umfaßt, das durch einen biegsamen Leiter (41, 51) mit der besagten Platte verbunden ist und sich im Verhältnis zu dieser verschieben kann;
b) die besagte Platte (1) und das Bauelement (4, 5) bis zu jeweiligen Anschlägen auf verschiedenen Abständen zu verschieben, wobei ein Anfangsteil der Verschiebebewegung gemeinsam erfolgt.

6. Verfahren nach Anspruch 5, **dadurch gekennzeichnet,** daß der Verschiebeweg des Bauelements (4) kleiner als derjenige der Platte (1) ist.

7. Verfahren nach Anspruch 6, **dadurch gekennzeichnet,** daß das besagte Bauelement aus einer Anschlußklemme (4) besteht.

8. Verfahren nach Anspruch 5, **dadurch gekennzeichnet,** daß der Verschiebeweg des Bauelements (5) größer als derjenige der Platte (1) ist.

9. Verfahren nach Anspruch 8, **dadurch gekennzeichnet,** daß das besagte Bauelement aus einem Wärmeschutzelement (5) besteht.

10. Verfahren nach Anspruch 8 oder 9, **dadurch gekennzeichnet,** daß ein Endteil des Verschiebewegs des Bauelements (5) seine Befestigung in einer Halteanordnung des Sockels (7) bewirkt.

## Claims

1. Geared electric wiper motor for a motor vehicle, whose base (7) is provided with a removable plate (1) carrying brushes (3) and at least one electrical component (4, 5) connected to the plate (1) by a flexible electrical conductor (41, 51), this component (4, 5) belonging to the supply circuit of the geared motor, characterised in that the said plate (1) has fittings (11, 12) for temporarily holding the said component (4, 5) during the mounting of the plate (1), this component being able to slide with respect to the plate (1) in order to cooperate with fittings for holding the said component (4, 5) provided on the said base (7) of the geared motor.

2. Geared motor according to Claim 1, characterised in that it has, as an electrical component, a connecting terminal (4).

3. Geared motor according to Claim 1 or 2, characterised in that it has, as an electrical component, a thermal protection component (5).

4. Geared motor according to one of Claims 1 to 3, characterised in that the said component (4, 5) is force-fitted on the base.

5. Method of mounting a brush-holder plate (1) and at least one electrical component (4, 5) on the base (7) of a geared electric wiper motor, this component belonging to the supply circuit of the geared motor, characterised in that it comprises the steps which consist of:
a) providing a brush-holder plate (1) which has fittings (11, 12) for temporarily holding the said component (4, 5), which is connected to the said plate by a flexible conductor (41, 51) and is able to slide with respect to it;
b) moving the said plate (1) and the component (4, 5) in translation as far as respective stops over different distances, an initial part of the translation movement taking place together.

6. Method according to Claim 5, characterised in that the translational travel of the component (4) is less than that of the plate (1).

7. Method according to Claim 6, characterised in that the said component consists of a connecting terminal (4).

8. Method according to Claim 5, characterised in that the translational travel of the component (5) is greater than that of the plate (1).

9. Method according to Claim 8, characterised in that the said component consists of a thermal protection component (5).

10. Method according to Claim 8 or 9, characterised in that a final part of the translational travel of the component (5) ensures its fixing in a retaining fitting on the base (7).
